# EUROPEAN PATENT SPECIFICATION

(11) **EP 4 377 666 B1**
(45) Date of publication and mention of the grant of the patent: **13.05.2026**
(21) Application number: 22758020.6
(22) Date of filing: 28.07.2022
(51) Int. Cl.: G01N 1/28, G01N 1/31, G01N 35/00

(54) **APPARATUS AND METHOD FOR PREPARATION OF A BIOLOGICAL SAMPLE FOR ANALYTICAL OR DIAGNOSTIC PURPOSES**
VORRICHTUNG UND VERFAHREN ZUR VORBEREITUNG EINER BIOLOGISCHEN PROBE FÜR ANALYTISCHE ODER DIAGNOSTISCHE ZWECKE
APPAREIL ET PROCÉDÉ DE PRÉPARATION D'UN ÉCHANTILLON BIOLOGIQUE À DES FINS D'ANALYSE OU DE DIAGNOSTIC

(30) Priority: 30.07.2021 IT 202100020600
(43) Date of publication of application: 05.06.2024
(73) Proprietor: Tethis S.p.A., 20143 Milano (IT)
(72) Inventor: FRANCHI, Gian Martino, 21040 Cislago VA (IT); CARBONE, Roberta, 20090 Opera MI (IT); SCARINCI, Daniele Timothy, 20145 Milano MI (IT); LECCARDI, Matteo Bruno, 20143 Milano MI (IT); STEPIEN, Grazyna Elzbieta, 21020 Mornago VA (IT); BERTINI, Claudia, 20008 Bareggio MI (IT)
(74) Representative: Papa, Elisabetta
(86) International application number: PCT/IB2022/056991
(87) International publication number: WO 2023/007422

(56) References cited:
- JP-A- 2002 257 821
- US-A1- 2020 209 120
- US-B2- 9 528 919

## Description

### Technical field of the invention

The present invention relates to the field of the apparatuses and methods for preparation of biological samples for subsequent analyses or for diagnostic purposes.

In particular, the present invention relates to an apparatus allowing the automated and standardized processing of a body fluid sample, preferably for analysis or diagnosis based upon the liquid biopsy, near the point for collecting the starting sample and configured so as to provide informative and stable components of said sample, particularly suitable to analysis of biological contents correlated to multiple conditions, thereamong tumour or degenerative or infective pathologies, or pathologies which can be detected in prenatal context.

### Background

In the clinical contexts it is known that the preanalytical phase represents a crucial moment within the activities for analysing the biological samples, since it comprises different procedure passages in which the incidence of different variables may affect the quality of the sample itself, the results of the subsequent analyses and their usability. The suitability and acceptability of the sample are fundamental components of the preanalytical phase thereon the variability of the results of the laboratory investigations are to be parameterized.

The preanalytical variables are several and include biological, physiological events and technical modes related to the collection, preparation, preservation and transportation of the sample which, often, determine uncertainties, errors and, sometimes, an unwished expense item by the laboratory for the management thereof.

The above-mentioned variables may affect in an important way the result of the laboratory tests by adding an additional uncertainty factor with respect to the obtainable results or they may cause responses not corresponding to the real biological situation of the patient, in particular in the diagnoses based upon the so-called liquid biopsy.

The liquid biopsy relates to that field of diagnostics, mainly oncology diagnostics, aimed at identifying and/or characterizing biological components through the analysis of samples of body fluids, such as for example the peripheral blood, and in particular of the elements correlated to the pathology, for example with the tumour, released in the blood circulation. The analyses of liquid biopsy can be aimed at identifying and characterizing circulating tumour cells (CTC) or foetal cells, in case of prenatal diagnosis, or of other cell-free elements (for example nucleic acids, proteins, exosomes) which are extracted from the (mainly acellular) liquid component of the sample after having eliminated the cellular component; the suspension cellular component can be used for extremely informative genetic analyses to characterize the mutational state of genome DNA and to compare it with the mutational features identified in the fraction of the cell-free DNA present in the liquid component. In the suspension cellular fraction genetic mutations can be found which have no pathological meaning and then their identification is fundamental not to run into false positives: this phenomenon, which has frequency increasing with age of individual, is known as CHIP (Clonal Haematopoiesis of Indeterminate Potential) and represents one of the major sources of wrong diagnosis. The suspension cellular component can further be used for proteomics and transcriptomics analysis of the immune cells. The three components, however, have sample preparation needs and analysis modes different from each other which limit the possibility of obtaining clinical information from all of them without having to recourse to multiple collections.

In order to maintain the integrity and composition of the sample, the known apparatuses and methods used in the sample preparation preanalytical activities generally face problems due to causes very different from each other, for example at the preservation temperature, the possible presence of preservatives, mechanical/physical stresses due to centrifugation, filtration, freezing, transportation and type of used test tubes/containers.

As from the very moment of the collection, the body fluid starts to deteriorate and several degradation phenomena may be observed. The cells modify their morphology and disintegrate, by releasing the genetic material contained inside thereof, which mixes with the one circulating in the liquid component. The not cellular material present in the liquid component (exosomes, proteins, vesicles, free nucleic acids), for example in plasma in case of blood collection, starts to damage, with consequent information loss, and then it requires the use of preservatives to stop or at least to slow down the process. However, these substances can interfere with the cellular biology, for example by changing the morphology thereof or by interfering with the protein expression. For example, some types of preservative are contraindicated in case one wishes to perform tests requiring a cellular reactivity, such as the adhesion to a substrate or the reaction to a marker, for example an antibody. Moreover, for example, freezing is a technique known to reduce the degradation phenomena for plasma, but it represents a critical preservation mode difficult to be controlled.

Moreover, in case of a blood sample, typically the formation of clots is noted, due to waiting time and transportation modes of the sample itself, to avoid this formation a common practice is to add anticoagulant to the collected blood. The problem is particularly felt in cytology, haematology and oncology, in particular in the protocols of liquid biopsy, in which an excessive coagulation is one of the causes of not acceptability of the sample.

Another example is the time elapsed between the collection and the analysis of the haematological samples, which is a decisive factor to obtain reliable results. In fact, in the procedures providing the use of anticoagulants, such as for example ethylenediaminetetraacetic acid (EDTA), it is known that a prolonged contact thereof with the blood sample causes modifications to the cells. Besides, should said procedures avail of preservatives, that is substances different from EDTA to allow to delay the above-mentioned degradation processes as previously described, the features of the blood and the reactivity of its cellular component would be altered and then the downstream tests would be compromised, especially in case of analyses related to the circulating tumour cells (CTC).

Therefore, the need is felt for solutions overcoming the difficulties of the known techniques associated to the time with which the analyses on the sample of body fluid have to be performed, particularly in the protocols of liquid biopsy, after their separation and with the purpose of not compromising their validity.

In consideration of the above, and in particular for the different needs for treating the different components of the body fluid sample with the purpose of slowing down the degradation processes thereof, the methods and known apparatuses typically provide the collection of a plurality of samples, which then are treated and analysed in different time and modes depending upon the type of analysis which is possible to search for/detect in that moment and nevertheless could concern the same diagnostic investigation. This situation represents and additional drawback, both in terms of uniformity of the informative content of the sample and in term of management costs for the analysis laboratory.

An additional disadvantage of the known solutions is attributable to the fact that however a significant manipulation activity by the operator is provided during the preparation of the sample to be analysed, by inevitably reducing the clinical validity of the assays and tests and the applicability of one same repeatable procedure for preparing the samples even in different diagnostic contexts.

Another problem of the known techniques is the fact that, in order to be able to isolate the biological material of interest from the other sample components, it is necessary to use techniques which represent a stress source for the sample itself and/or which cause a partial loss thereof. For example, the filtration by filters or microfluidic systems, the use of magnetic beads and cytocentrifugation can be mentioned. For example, with specific reference to the management of the liquid samples containing cells, such as blood, one of the most widespread technical solutions is the use of a cytocentrifugation unit in which indeed a centrifuge allows to collect said cells by squeezing them directly on a support, typically a slide. Such mode, currently used and very common in the laboratories, however, involves not only a cellular loss of the sample, since the cells generally tend to detach from the support, but even a morphology loss and an adhesion of the cells in a not uniform way and on overlapped planes which - by partially masking the cellular content - compromises an adequate and complete analysis thereof under the microscope. Although attempts have been proposed to mitigate such negative effects of cellular loss and damage to the morphology, such attempts are actually confined within manual or empiric solutions, specific for each laboratory or the effectiveness thereof is operator-dependent. Such problem, if already relevant in the cytologic analyses, becomes even more critical in the context of the circulating tumour cells considering their rarity inside the fluid sample.

Patent document JP 2002 257821 discloses to obtain from a liquid suspension of cells cultured with reagents, exclusively the cellular component, discarding from time to time the supernatant obtained by centrifugation.

### Brief description of the invention

The technical problem placed and solved by the present invention then is to overcome the above-illustrated problems and, in particular, to provide an apparatus, as defined in claim 1.

Additional features of the present invention are defined in the corresponding depending claims.

The present invention also relates to a method for the automated preparation of a body fluid sample, treated to obtain, in combination or alternatively, one or more, preferably a plurality of, informative components of said sample, for chemical analyses, in particular of liquid biopsy, as defined in claim 10, and in particular:
- a first immobilized cellular component, preferably stabilized on a planar support,
- a second suspension cellular component, preferably stabilized inside a test tube,
- a third liquid, stable component or stabilized inside a test tube.

The apparatus of the invention is an apparatus for the automated processing of a biological sample for chemical analyses, in particular of liquid biopsy, which uses as starting material a body fluid sample. In a preferred embodiment, the body fluid sample processed by the apparatus is a sample of whole blood.

The apparatus provides a box-like body comprising an internal chamber and an opening for accessing said chamber. The internal chamber has first, second and third housing means which, respectively, are configured to house the fluid sample, reagent elements and a planar support suitable to immobilize cells of the sample. The apparatus even comprises means for collecting liquid and solid waste. The apparatus further comprises means for collecting and dispensing the sample and/or reagents and/or intermediate preparations of the sample in the internal chamber.

The apparatus further comprises centrifugation means, operatively associated to said collecting and dispensing means, and a control unit. The control unit is configured to control the collecting and dispensing means and the centrifugation means according to an automated protocol.

The overall configuration of said apparatus is so that, according to said automated protocol, the apparatus allows to obtain from the biological fluid sample entering the internal chamber a first component of the sample and/or a second component of the sample and/or a third component of the sample and a component of process waste, in which each one of said components are separate and distinct from each other.

The first component includes cells of the sample immobilized on said planar support, the second component include cells of the sample in a liquid suspension, preferably made available in test tubes, the third component includes the sample liquid fraction, for example plasma, preferably made available in test tubes, and the fourth component includes the process liquid waste.

According to the invention, said apparatus allows to obtain at the same time at least two components of the three above-mentioned informative components, apart from the process liquid waste.

Advantageously, the apparatus of the invention allows to prepare for the analysis biological samples on planar supports, for example blood samples collected in test tubes containing exclusively anticoagulants, preferably EDTA, by keeping them stable over time, for example up to one year, thanks to their quick processing and stabilization performed by the apparatus. Then, it is possible to interrupt the laboratory *workflow* and to be able, for example, to freeze the components of the obtained sample by improving considerably the modes for managing the analysis activities (*laboratory practicability*)*.* In other words, from a biological point of view, the apparatus of the invention guarantees a validity of the analysis results which do not result to be altered, thanks to the immediate processing after sample collection, whereas from a sample management point of view the apparatus of the invention allows easily to implement a flow of laboratory analyses which does not force the operator to work consecutively. In particular, in case of blood samples the apparatus of the invention makes possible to obtain such advantages even by performing collections in test tubes containing only anticoagulants, preferably EDTA, thus by minimizing the sample alterations typically induced by the preservatives.

Still, the apparatus of the invention allows the possibility to process one single sample, therefrom all three above-mentioned informative components can be obtained. In fact, from one single sample entering the apparatus, a first and a second component can be obtained comprising the cellular elements of the sample, respectively deposited on support or in suspension, a third component comprising the liquid component and an additional component comprising the liquid waste. Advantageously, then it is possible to obtain simultaneously from one single sample entering the apparatus, three distinct components with extremely informative and clinically valid content, by overcoming the limits placed by the different needs of the three components in order to guarantee the preservation and stability over time thereof.

A particularly advantageous aspect of the invention then is represented by the fact that the apparatus allows to obtain from one single entering sample a plurality of pieces of information from its different components, without having to collect samples in different time/moments to perform the set of required analyses and without having to use during collection a plurality of containers with specific preservatives or reagents for the different informative components which one wants to obtain from the body fluid.

Advantageously, the apparatus of the invention allows to obtain from one single biological sample:
- a first cellular component of the entering sample particularly suitable to identify circulating tumour cells (CTC),
- a second suspension cellular component mainly consisting of white blood cells, particularly suitable to the analysis of the protein content and of the nucleic acids of the white blood cells contained therein, in particular for example as control of the analysis of the mutations in case present in the free nucleic acids present in the liquid fraction or for specific analyses on the content of the immune cells
- a third component comprising the liquid fraction, for example the plasma, which is widely used, even in the clinical practice, for the analysis of a plurality of analytes, such as for example the free nucleic acids (cell free DNA, cell free RNA), proteins, vesicles and exosomes.

An additional advantageous aspect of the invention relates to the fact that the apparatus allows to prepare in automated way the biological sample to be analysed, by providing an almost total standardization to the process for preparing the sample and so that the subsequent analyses can be performed in various clinical contexts and results have effective clinical utility.

According to a preferred embodiment, the apparatus is configured to work with means for supporting the obtained components, in particular planar supporting means, which results to be functionalized through a surface deposition of nanomaterials. Said supporting means, in particular in the form of a slide, allow an immediate, delicate and effective adhesion of any living cell, advantageously allowing a total capture approach in the protocols of liquid biopsy.

The so configured apparatus allows to dispense the reagents and to perform the subsequent washings in wholly planar mode, thus by avoiding the need for solutions which provide the substrate immersion in containers filled up with high volumes of reagents.

The apparatus is configured so that the sucking and dispensing speed, the moved volumes and the arm positioning precision allow to reconcile the process needs of each one of the informative components.

The above then results to be particularly advantageous in the protocols of liquid biopsy since, thanks to the immediate, automated and standardized preparation of the sample, the apparatus returns at least a component having indeed a substantially intact repertoire of clinically informative cells from fresh sample (for example CTC) and allows to obtain the maximum sensitivity even in contexts of early-stage disease.

Advantageously, the apparatus of the invention then allows a subsequent complete analytical evaluation of the morphological, proteomic and genetic features at the level of single cell, fixed or in suspension, or on the cell-free component contained in the liquid fraction (the third component obtained from the sample); it further allows both a completion of the detectable clinical analytical information and a comparison between the features of the different informative content.

The first component obtained with the apparatus is suitable to be analysed with traditional techniques of pathological anatomy, such as cytology, immunocytochemistry, immunofluorescence, FISH and molecular analysis.

The second component, consisting of a suspension cellular fraction, is suitable to the proteomic analysis by FACS techniques, mass spectrometry, ELISA and to genetic investigations by sequencing (NGS, RNAseq, Sanger, digital PCR) both to obtain specific information about the white blood cells contained therein and to compare the mutations identified in the cell free DNA, present in the third liquid component, with the possible mutations present in the cellular genomic DNA extracted from the suspension cells present in the second component; such comparison is essential to validate the result of the mutations identified on the cell free DNA of the third component and then to exclude the presence of false positives which would invalidate the analysis result.

On the contrary, the third component is suitable for the genetic and epigenetic analyses on the free nucleic acids (NGS, Sanger, digital PCR) and other analyses on other analytes (such as for example circulating proteins and exosomes).

A combination of the *imaging* analysis guided by the artificial intelligence on the cellular component on planar support with the advanced genetic sequencing on the same cells and the analyses on the elements extracted both from the liquid component of the samples (acellular content) and from the suspension cellular component prepared with the apparatus of the invention allows the maximum sensitivity and specificity of the liquid biopsy tests in any clinical context. The combination of absence of preservatives during collection and of reduction in the stress induced by the most common methods for insulating the significant components advantageously allows to reduce the loss of information obtainable from the sample.

In substance, the invention makes available a pre-analytical apparatus which guarantees a standardized and automated preparation of a fresh body fluid sample, suitable to implement the main protocols of liquid biopsy and which, preferably, uses specific supports, for example slides, functionalized and configured to preserve the morphological features of the cells with the purpose of providing a first component of said sample suitable to identify the cellular components. Apart from standard microscope slides, alternative supports may be coverslip, single-or multi-well plates.

The apparatus of the invention at the same time is configured to provide, along with the first component, a second component of said sample for the analysis of the suspension cells, and a third component of said sample, in particular a component comprising the liquid fraction, for the analysis of its content deprived of cells, without the need for using test-specific test tubes, for collecting blood, nor the help of specialized technicians.

The invention results to be particularly advantageous in oncological context, in particular in searching for cells and rare content, such as for example CTC in the first component and circulating nucleic acids or other tumour markers in the third component, and the comparison with the nucleic acids of the suspension white blood cells present in the second component. In particular, advantageously it is possible to compare possible anomalies in the genomic content of one (or both) between the first and the third component with the genomic content of the component containing suspension cells, to discriminate mutations present in the white blood cells which have no pathological meaning. Furthermore, for example, in the immunotherapy context it is particularly useful to be able to analyse specific features of the suspension white blood cells by means of transcriptomic analysis.

At last, the system can be programmed to manage simultaneously a variable number, preferably from 1 to 8, of samples coming from one or more different subjects, by using then a variable number, preferably from 1 to 80, of slides for each sample, by making it flexible for diagnostic contexts which can require different amounts of sample to be analysed.

Other advantages, together with the features and use modes of the present invention, will result evident from the following detailed description of preferred embodiments thereof, shown by way of example and not for limitative purposes.

### Brief description of figures

The drawings shown in the enclosed figures will be referred to, wherein:
- Figure 1 shows an overall view illustrating a preferred embodiment of the apparatus according to the present invention;
- Figure 2 shows a top schematic view of the inside of the apparatus illustrated in Figure 1;
- Figure 3 shows a preferred embodiment of means for housing the body fluid sample to be processed implemented in the apparatus of Figure 1;
- Figure 4 shows a preferred embodiment of means for housing reagents and waste implemented in the apparatus of Figure 1;
- Figure 5 shows a preferred embodiment of means for housing the planar supports intended to carry immobilized the cells of the fluid sample to be processed and preferably used in association with the apparatus of Figure 1;
- Figure 6 shows a preferred embodiment of means for housing replaceable components, in particular tips, of the collecting and dispensing means incorporated in the apparatus of Figure 1;
- Figure 7 shows a preferred embodiment of the centrifugation means incorporated in the apparatus of Figure 1.

### Detailed description of embodiments of the invention

The present invention will be described hereinafter by making reference to the above-mentioned Figures.

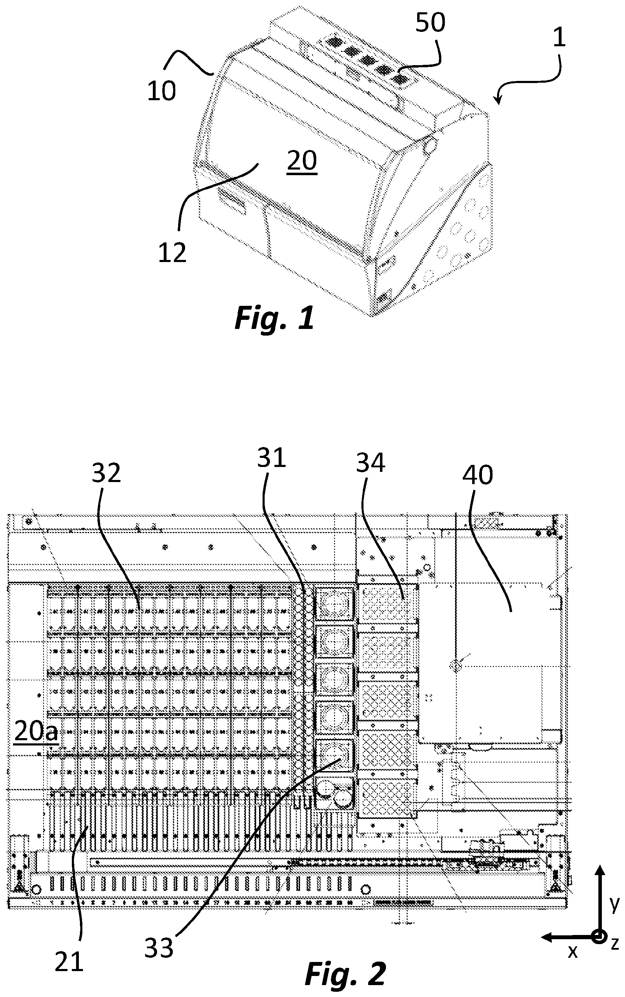

By firstly referring to Figure 1, an overall view of an apparatus for the automated processing of a sample of biological fluid, in particular of blood, with analytical or diagnostic purposes is schematically shown. The apparatus is designated as a whole with reference 1.

The apparatus is preferably applied in the preparation of blood samples within procedures of clinical analyses, in particular of liquid biopsy. However, other applications of liquid biopsy are not excluded by using other types of body fluids, such as urine, cerebrospinal fluid, pleural fluid, bronchial washings, sputum, cytological collections through aspirated needle, samples which generally consist of several informative biological fractions (acellular component and cellular component). Moreover, an advantageous application in other fields, such as cytology, immunology, search for pathogen agents and as alternative to all cytocentrifugation applications is not excluded.

The apparatus preferably is a bench tool and comprises a box-like body 10 having an internal chamber 20 and an opening 12 for accessing said internal chamber 20. In a preferred embodiment, the components described hereinafter are contained in the internal chamber 20, that is where the preparation of the biological sample takes place.

As it will be described hereinafter, the apparatus 1 is preferably provided with a system for filtering the air and/or the vapours present in said internal chamber 20. Such system is designated as a whole with reference 50.

The internal chamber 20 is divided into a plurality of areas, or zones, intended to receive housing means configured for housing the fluid sample, the intermediate preparations thereof, reagents, waste and informative components of said sample obtained with the apparatus 1.

The housing means preferably is removable and can be inserted/extracted through the opening 12 of the box-like body 10 to insert/recover/replace the content thereof.

Figure 2 shows a top schematic view of the inside of the apparatus 1. In a preferred embodiment, the internal chamber 20 comprises guiding means 21 configured to couple with the housing means so as to facilitate the extraction and insertion thereof from/in the apparatus and to guarantee their correct positioning. In Figure 2, the guiding means is illustrated by way of example as tracks carried by a support plane 20a of the internal chamber 20 configured to receive as rest and sliding the housing means.

The apparatus 1 is further provided with a movement system (of the sample, of the reagents and of its intermediate preparations) which comprises collecting and dispensing means, configured to work, preferably, with, for example 1-millimetre or 5-millimetre, replaceable tips.

The activities for collecting and dispensing the liquids are performed preferably through a movable arm, for example along a triad of mutually orthogonal axes, advantageously comprising two collecting/dispensing channels independent of each other.

Said arm allows the motions in space of the tips for their positioning in points of interest in the internal chamber 20, in particular at the housing means. Said arm allows to move the liquids in a plurality of sample preparation intermediate positions in the internal chamber 20.

For example, the arm motion allows a positioning of the tips on the plane xy whereas a relative motion of said channels with respect to the movable arm allows to position the tips along the direction z orthogonal to the plane xy. Said channels can be slidingly coupled to the movable arm by guides integral with the movable arm to implement the motion along the direction z. The distance (interaxis) between the two channels is preferably fixed.

The movement system preferably has a resolution and a positioning accuracy of the order of a tenth of a millimetre. The movement system, in particular the collecting and dispensing means, moves exclusively liquids and for example not containers, bottles, test tubes or slides which can be received in the housing means.

Said collecting and dispensing means is configured so as to perform procedures at different speeds, depending upon the type of performed procedure. In a preferred embodiment, said collecting and dispensing means is provided with stepping motors to allow controlling the shifting of small fluid volumes, ideally with a precision lower than ul (microlitre), preferably of 0.3 ul, and to obtain a precision in the definition of the speeds of 3 ul/s (microlitre per second), preferably of 1 ul/s. This advantageously allows to obtain slow, constant and uniform suctions and dispensations, features which are not guaranteed in the manual processing of a sample and which influence the stability thereof.

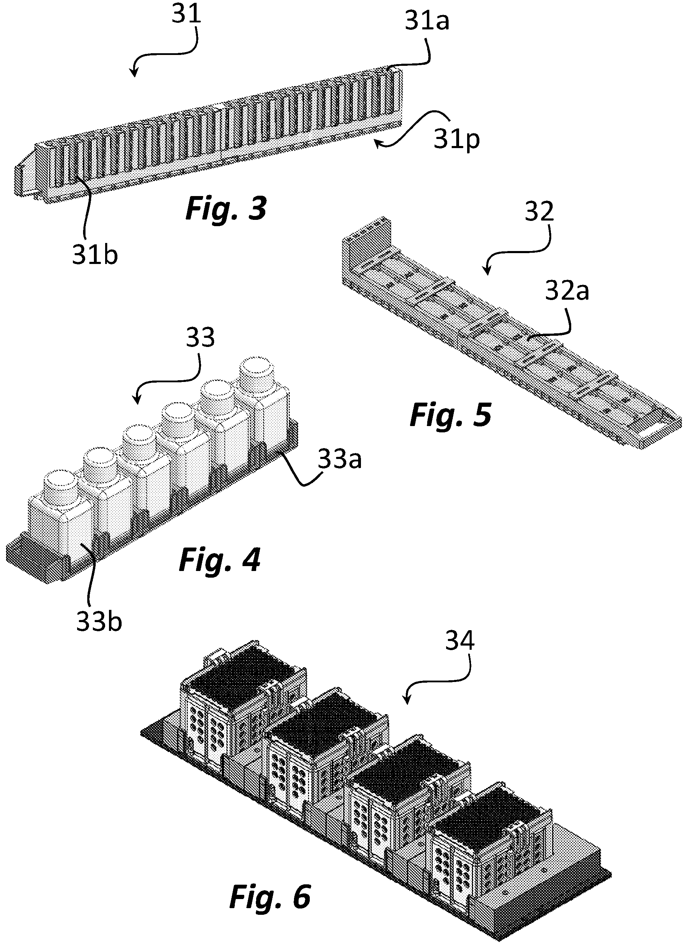

In a preferred embodiment of the apparatus 1, even said tips can be charged in the housing means, shown by way of example in Figure 6 and designated with reference 34. Advantageously, it is possible to replace the tips used by the collecting and dispensing channels to avoid contaminations of reagents and samples.

The apparatus further comprises centrifugation means 40 operatively associated to the collecting and dispensing means and a control unit. The latter is configured to control the centrifugation means 40 and the collecting and dispensing means according to an automated sample preparation protocol which will be described in more details hereinafter. The control unit preferably is placed outside said internal chamber 20.

The overall configuration of the apparatus is so that the automated protocol allows to obtain from the sample entering the internal chamber 20 a final preparation comprising one or more, preferably a plurality of, informative components of the sample separate and distinct from each other, that is a first component of the sample and/or a second component of the sample and/or a third component of the sample, apart from a process waste component.

In particular, the first component includes, or consists of, cells and results to be immobilized on a planar support for analysis of liquid biopsy intended to be received by the housing means. The second component includes cells suspended in a fluid and it is contained in dedicated collecting means. The third component includes, or consists of, the sample liquid fraction, for example plasma, and it is contained too in dedicated housing means. The waste component collects waste, preferably liquid waste, of the sample processing and it is contained in dedicated collecting means.

By further referring to Figures 3-6 embodiment examples of the housing means housed in the internal chamber 20 are described hereinafter.

For example, Figure 3 shows a preferred embodiment of first housing means 31 configured to receive the biological fluid sample entering the apparatus 1. As it can be seen, such housing means comprises a plurality of seats 31a, to form for example a *rack,* shaped so as to receive test tubes containing the sample. For example, each sample can be contained in a 10 ml test tube. In particular, a blood sample could be contained in a Vacutainer^{®}-like 10 ml test tube. In a preferred embodiment, the apparatus can house a variable number of samples, preferably from 1 to 8 samples, preferably coming from 1 or more different subjects, preferably with two identical *vials* for each sample. Said seats 31a can have lateral openings 31b to allow reading means to perform a reading of identification and/or traceability codes present on the test tubes.

Figure 4 shows a preferred embodiment of second housing means 33 configured to receive reagents and to contain the collecting means of the waste component. In particular, the second housing means 33 comprises a plurality of seats 33a each one shaped to receive a respective bottle 33b containing said reagents or the waste. Examples of reagents used in association to the procedures implemented by the apparatus 1 of the invention are PBS (Phosphate Buffer Saline), RBL (Red Blood Lysis Buffer) and a fixer solution preferably comprising formaldehyde, preferably comprised between 2% and 4%. The fully loaded apparatus 1 for example can contain 400 ml of PBS, 300 ml of RBL, 45 ml of said fixer solution and 500 ml of waste.

Figure 5 shows a preferred embodiment of third housing means configured to receive means for supporting the first component of the sample obtained with the apparatus of Figure 1 and comprising cells.

Analogously to what described above in relation to the first housing means, the third housing means preferably comprises a plurality of seats 32a, to form for example a *rack,* each one preferably shaped so as to receive a planar support, in particular a slide. In a preferred embodiment, the apparatus 1 can house eight *racks* wherein each *rack* can receive up to ten slides.

The movement system will perform the process for dispensing the cells on the planar support and the output of the automated protocol preferably comprises a planar support comprising a homogeneous layer of cells, for example white blood cells. Preferably, the third housing means 32, that is each seat 32a and/or each slide housed thereby, has an identification code suitable to allow the apparatus 1 to generate a traceability report.

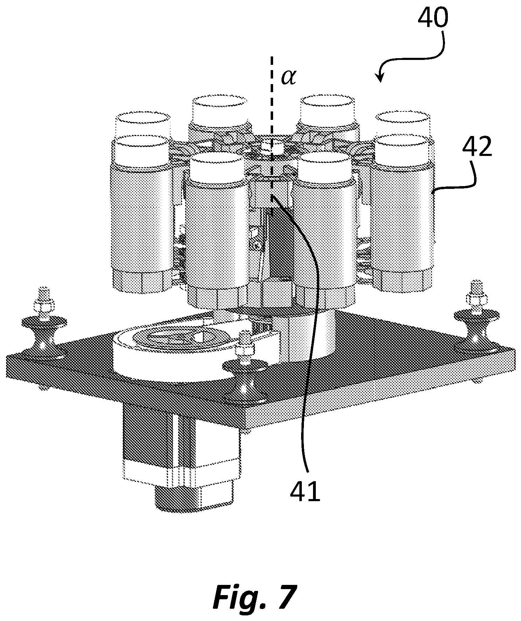

The second component of the sample obtained with one of the forms of the implemented protocol, is collected in containers, preferably test tubes, carried by fourth housing means or by suitable seats (designated with reference 42 in Figure 7) of the centrifugation means 40, said seats will be described shortly.

The third component of the sample, for example plasma, obtained with the protocol implemented by the apparatus is collected in containers, preferably in test tubes, carried by said fourth housing means, which is not shown in the Figures but having shape analogous to what described above for the first housing means 31. The fourth housing means is provided in the internal chamber 20 to receive even intermediate preparations of the sample. In an alternative embodiment of the invention, a portion 31p of the *rack* of the first housing means 31 is loaded in the internal chamber 20 with empty test tubes and it is extracted with test tubes containing the second and/or the third informative component obtained by processing the sample.

As mentioned above, Figure 6 shows a preferred embodiment of the housing means 34 configured to receive the above-mentioned tips. In particular, the replaceable tips are carried in the internal chamber 20 preferably near the dispensing and/or collecting means.

Apart from means for collecting the component consisting of waste in liquid form, the apparatus can include even means for collecting waste in solid form obtained during the sample preparation.

As mentioned above, the apparatus 1 of the invention advantageously comprises reading means, preferably integrated in the movable arm. In particular, the reading means advantageously comprises a first and a second reader, for example of optical type, capable of reading unique identification codes of the samples, of the reagent elements, and of the supports (test tubes or slides) used for the first, second or third component obtained from the preparation of the sample. In this way, their complete traceability is guaranteed. The codes read by the reading means are transmitted to the control unit which, for example, can generate a traceability report. Preferably, the first reader is configured for reading the codes associated to the test tubes of the sample, to the vials and to the bottles containing the reagents. Preferably, the optical beam of the first reader is comprised in a plane substantially parallel to the support plane 20a of the internal chamber 20. The optical beam of the second reader is preferably comprised in a plane substantially orthogonal to the support plane 20a of the internal chamber 20 and it is preferably configured for reading the codes which can be associated to the planar supporting means and/or to the respective seats 32a.

By further referring to Figure 7, a preferred embodiment of the centrifugation means is shown (the casing is not represented in figure), designated as a whole with reference 40. The centrifugation means preferably comprises a rotatable drum, or basket, 41 provided with a plurality of seats 42 arranged peripherally in radial direction with respect to the rotation axis *α* of the drum 41. The motor moving said centrifugation means preferably is a stepper motor. Each seat 42 of said plurality develops along a direction substantially parallel to said rotation axis *α* and it is shaped to receive a test tube containing the sample, an intermediate preparation thereof or the above-mentioned second informative component of the sample. A number of seats can be for example provided to contain up to eight test tubes, each one of 30 ml. In an alternative embodiment of the invention, each seat 42 is shaped to receive several test tubes having different sizes containing the sample of an intermediate preparation thereof.

Preferably, the drum 41 and/or the seats 42 are tilting and a rest, or static, position of the seats 42 determines a right angle between its own development direction and the support plane 20a of the internal chamber 20. The drum 41 can reach a rotation speed equivalent to 400g. During the centrifugation process, depending upon the speed reached by the centrifuge itself, the seats 42 can tilt as far as reaching a position parallel to the support plane 20a of the internal chamber 20.

Advantageously, the centrifugation means 40 is configured so that the drum 41 and/or the seats 42 can be stopped by the control unit of the apparatus 1 in a predefined position, thus allowing the movable arm to access in automated way to the test tubes carried thereby.

Additional structural components, implementing the motion of said centrifugation means 40, are within the comprehension of the person skilled in the art and they will be not described in greater detail.

As previously mentioned, the apparatus 1 preferably is provided with a system 50 for filtering the air and/or vapours present in the internal chamber 20. The automated protocol for preparing the sample preferably provides the use of a fixer solution. In case of a blood sample, such solution includes for example a percentage of 4% formaldehyde and, advantageously, said filtering system 50 allows to be able to use then safely the apparatus 1 without requiring additional external containment means, such as chemical hoods. Additional embodiments of the invention can provide the use of other organic compounds, such as alcohol-based fixatives, usable too without using additional containment means thanks to the presence of the filtering system 50.

Going back to Figure 2, the filtering system 50 is an active system, preferably assembled on a top portion of the box-like body 10. The filtering system 50 implements a depression allowing to confine inside the apparatus the vapours of the reagents by filtering them by means of a suitable active filter. The filtering system 50 comprises (not visible) fans and filters, for example from one to three filters, to create a forced air flow for containing the vapours generated in the internal chamber 20.

The speed of the fans can be adjustable depending upon the steps of the automated protocol. For example, the air flow generated by the fans will be adjusted to the minimum, that is sufficient to avoid leakages of vapours from the apparatus 1, during the first steps of the protocol when the fixer solution is still in the bottle. During the dispensation of the fixer solution, that is when the evaporation *rate* is at maximum, the fans on the contrary will guarantee a greater flow to reduce the concentration of fixative vapours. The filtering system 50 can be sized to guarantee a working load equivalent to at least six months of work. The control unit of the apparatus preferably is configured to signal to the user the need for a maintenance intervention for replacing the filters. In a preferred embodiment, the fans can be made to operate at the maximum of their speed at the end of the automated protocol to speed up the drying time of the planar supports from the residues of reagents remained thereon.

In a preferred embodiment, the apparatus 1 is operatively associated to a device configured to count the number of cells present in the biological sample. In a preferred embodiment of the invention, such device is configured to count the number of white blood cells.

Such device configured to count the number of cells can be incorporated in the apparatus 1 or it can be an external device operatively coupled thereto and indeed it allows to determine the suitable dilutions for the sample preparation. The counting of the cells preferably takes place in a step performed during the sample loading in the internal chamber 20 and it can take place by rating the entering sample during the loading step.

For example, the linear correlation between the counting of the white blood cells present in the whole blood and the height of the *pellet* (white blood cells precipitated onto the bottom of the test tube) which is obtained with the lysis process was verified experimentally. With this correlation, for each sample the concentration of the white blood cells thereof is known, the height of the *pellet* with respect to the supernatant is obtained. Then, it is advantageously possible to remove in a predetermined way the supernatant fraction in the lysis protocol. Moreover, it is possible to calculate easily even the *pellet* volume and the total number of white blood cells present in the single vial. By rating in the test tube a *buffer* volume depending upon the two above-mentioned parameters, it is possible to obtain a cellular resuspension with equivalent density for each sample. This process allows to dispense a comparable number of cells on each planar support for each sample.

The processing of the cell counting then advantageously provides some operation parameters of the automated protocol implemented by the apparatus 1. As it will be described in detail hereinafter, preferably said parameters comprise the height of the cellular elements (or *pellet*) precipitated in the test tube during the sample processing and the resuspension volume to obtain a comparable density of cells to be dispensed on the planar support.

As mentioned above, the control unit of the apparatus implements an automated protocol for preparing the sample which allows to provide as output a first component which includes cells immobilized on a planar support, and/or a second component which includes suspension cells, and/or a third component which includes the liquid fraction preferably received in test tubes, apart from a component which receives the, preferably liquid, waste, each one of said components being separate and distinct from each other.

A preferred embodiment of the automated protocol implemented by the apparatus 1 with reference to a sample of biological fluid consisting of whole blood is described hereinafter by way of example and not limiting the scope of the present invention, which is defined by the appended claims.

At first, a test tube with a blood sample to be processed is loaded in the apparatus 1 of the invention, apart from possible reagents. In particular, the suitably labelled test tube is introduced in the internal chamber 20 and it is housed in the respective *rack* 31. The insertion of the *rack* 31 in the corresponding area of the support area 20a activates the procedure for reading the traceability codes associated to the samples. Preferably, the insertion of each type of housing means in the corresponding area of the support plane 20a activates the procedure for reading the relative position and traceability codes, present both on the housing means itself and on the supports inserted therein. If not already present in the internal chamber 20, the housing means is also loaded, complete with the planar supports, or slides, of the reagents and of the flasks for the collection of the waste liquids, the replaceable (disposable) tips, of the test tubes for the collection of plasma and of the suspended cellular component, the test tubes in the seats 42 of the basket 41 of the centrifugation means 40. A first aliquot of blood is transferred from the collecting and dispensing means by multiple pipettes in a test tube present in the basket 41. The sucking and dispensing speed of the blood are preferably comprised between 460 and 650 ul/s and the transferred volumes for each pipette are preferably comprised between 3 and 5 ml. Once concluded the transfer process of the blood sample the separation of plasma from the cellular portion of the blood starts by centrifugation. The centrifugation means 40 reaches the regime speed, it keeps it preferably for ten minutes and subsequently is decelerated in a bland and controlled way to avoid the resuspension of the content of the test tube. In a preferred embodiment of the invention, the stepper motor of the centrifugation means allows to control the position, the rotation speed, the acceleration and the deceleration. Two initial components of the blood sample are so obtained, a component containing cells and a component containing plasma.

The basket 41 is stopped in a predefined position and the movable arm collects and transfers the sample component containing the plasma in dedicated containment elements. The plasma sucking speed is preferably comprised between 20 and 150 ul/s, more preferably comprised between 90 and 110 ul/s, and it is so as to reduce advantageously the damages to the cellular content, analogous to those due to the spontaneous degradation of the sample over time. The dispensing speed is comprised between 300 and 400 ul/s. The volumes transferred for each pipette are preferably comprised between 2 and 3 ml.

In a first embodiment of the invention, such containment elements are preferably carried by a partition of the housing means 31 of the internal chamber 20, in particular in a new test tube intended to the subsequent preservation and disposal. In a second embodiment of the invention, said containment elements are carried in the not previously used seats 42 of the centrifugation means 40, in particular in new test tubes, to perform a second centrifugation.

The transfer procedure is preferably performed by a series of pipettes. A volume of plasma preferably equal to approximately 3 ml for each blood test tube is transferred. In a preferred embodiment of the invention, the movable arm is provided with a stepper motor, allowing a positioning precision on the axis z in the order of a tenth of millimetre. Such precision allows to conciliate the need for sucking as much as plasma volume as possible without sucking cellular content from the underlying layers.

Subsequently the reagents are collected and they are dispensed in the test tube of the basket 41 containing the cellular portion of the blood sample (that is therefrom the plasma was removed) for a subsequent lysis of the red blood cells, preferably a fixed volume, for example with a dilution ratio 1:4 or with a maximum final volume of 30 ml. Preferably even a re-suspension procedure is performed in order to homogenize the content of said test tube containing only the cellular portion and then an intermediate preparation is obtained.

The speeds for sucking, dispensing and re-suspending the reagents are preferably comprised between 500 and 2000 ul/s, more preferably between 1400 and 1600 ul/s. The volumes transferred for each pipette are preferably comprised between 4 and 5 ml. In an alternative embodiment of the invention, the resuspension can be performed by causing the circular motion at high speed of a small magnet placed on the bottom of each test tube in the centrifuge by means of a rotating magnetic field generated by a support having permanent magnets, put in rotation at the centrifuge base.

Afterwards, the automated protocol preferably provides a cyclic series of procedures on the intermediate preparation which comprises, in sequence, the steps of the (above-described) dilution, resuspension, centrifugation and removal of the supernatant until obtaining a component of the blood sample containing cells, in particular white blood cells. In case a second centrifugation is provided, such centrifugation takes place simultaneously with the first cycle of procedures on the intermediate preparation.

In detail, in the dilution step, the movement means collects reagent and dispenses it in the test tube containing the cellular fraction (resuspension) in order to homogenize the content of the test tube. In quick succession the last procedure is preferably repeated five times.

A waiting period, preferably of five minutes, follows.

In the subsequent centrifugation step, the control unit activates the centrifugation means, preferably until a rotational speed equivalent to 400g, for a centrifugation time preferably equal to five minutes followed by a deceleration step. The deceleration can be performed through a mechanical braking. In an alternative embodiment of the invention, the deceleration can be controlled by a stepper motor. When the basket 41 is stopped, the movable arm positions to collect the supernatant, generally approximately 29 ml, and dispenses it in a bottle intended to waste. The supernatant sucking speed is comprised between 450 and 550 ul/s. The volumes transferred for each pipette are preferably comprised between 2 and 5 ml. In particular, the residual volume of cellular fraction contained in the intermediate preparation is evaluated by the automated protocol depending upon the number of white blood cells determined by the counting device.

In case a second centrifugation is provided, at the end of the first cycle the movable arm sucks the plasma from the test tubes in the seats 42 and dispenses it in not previously used test tubes placed in the housing means 31. The plasma sucking speed is preferably comprised between 20 and 150 ul/s, more preferably comprised between 90 and 110 ul/s, whereas the dispensing speed is comprised between 300 and 400 ul/s. The volumes transferred for each pipette are preferably comprised between 2 and 3 ml.

Said cyclic series of procedures is preferably repeated for three times until the test tube housed in the centrifugation means 40 preferably contains approximately 1 ml of pellet. The steps for diluting the intermediate product with the reagents are preferably performed in a ratio 1:4, for example by using as reagent RBL. The final suspension step is preferably performed in a ratio 1:10 by using preferably PBS.

Once obtained the component of the sample carrying the optimum concentration of cells, in particular of white blood cells, the automated protocol provides, preferably five, resuspension cycles.

Subsequently, a portion of the cellular component is collected and dispensed on the planar supports housed in the second housing means 32 of the internal chamber 20. The sucking speed is comprised between 450 and 500 ul/s, whereas the dispensing speed is preferably comprised between 100 and 500 ul/s, more preferably comprised between 300 and 380 ul/s. The volumes transferred for each pipette are preferably comprised between 700 and 900 ul.

The step for dispensing the cellular component on the slides advantageously provides the deposition of a single substantially uniform layer of white blood cells, preferably about two million of white blood cells, on each planar support and so that they result to be substantially not overlapped.

The dispensing step advantageously takes place with one single continuous movement of the dispensing tip. In particular, the tip positions at the functionalized surface of the slide and performs a continuous dispensing during the shifting of the tip itself along the larger size, in particular the larger axis, of the functionalized surface of the slide. This dispensing has the advantage of being quick and of guaranteeing a substantial uniformity of the adhesion.

Other dispensing methods are possible. For example, it is possible to provide a contemporary dispensing of the cellular component by two fixed tips positioned at the functionalized surface of the slide, even if such mode requires longer periods of time. The dispensing step preferably concludes within twenty minutes from the last performed resuspension cycle.

At the end of the dispensing step, a portion of the cellular suspension remains available inside the test tubes in the seats 42 of the basket 41 of the centrifugation means 40. Said portion constitutes the second informative component obtainable with the apparatus of the invention. Said portion can be sucked by the movable arm and dispensed in not previously used test tubes placed in the housing means 31. The sucking speed is comprised between 450 and 500 ul/s, whereas the dispensing speed is comprised between 300 and 380 ul/s.

Subsequently, the protocol provides a step for adhering the cellular component on the planar support, which is advantageously treated to preserve the morphological features of the cells. The planar supports used in association with the apparatus of the invention in the herein described automated protocol have specific surface features and are preferably functionalized with a surface deposition of nano-materials. The adhesion of the cellular component is performed at room temperature and it lasts approximately twenty minutes.

A step of sucking the supernatant from the planar support follows, preferably with two tips in two distinct points so as to leave only a liquid fraction (for example 100 ul) on the planar support. The sucking speed is comprised between 80 and 120 ul/s, whereas the dispensing speed is comprised between 1400 and 1600 ul/s. The volumes transferred for each pipette are preferably comprised between 600 and 700 ul.

Subsequently steps alternate for dispensing and sucking (the supernatant) on/from the planar support, at first of PBS, then of the fixer solution and at last of washing solutions. The sucking speed is comprised between 1400 and 1600 ul/s, whereas the dispensing speed is comprised between 300 and 380 ul/s. The volumes transferred for each pipette are preferably comprised between 500 and 1000 ul. Such procedures are always performed on predefined points, for example four points or two points, of the planar support and all of them at the same distance from the support itself calculated along the direction z.

In particular, the reagent dispensing takes place contemporarily through the two fixed tips, positioned at the functionalized surface of the slide. The tips, once loaded with reagent, position above the predefined points at a predetermined distance from the slide surface and release the wished volume of reagent. The optimum dispensing and sucking distance from the slide is defined based upon a range of values obtained experimentally. Beyond the upper threshold of said range (the tolerance is lower than the millimetre), the residues of the reagents left on the slide have a volume comparable to the subsequent reagent and this involves a dilution of the reagent dispensed subsequently. Below the lower threshold of said range, the adhesion of the cellular component is disturbed by the presence of the tip which determines slide areas in which cells are absent or lacking indeed at the positions assumed by the tip. As for all liquids dispensed on the slide (cellular component of the sample included) the presence of an external hydrophobic edge of the slide and of the internal surface functionalized with hydrophilic material, preferably hydrophilic nanomaterial, allow the liquid to expand and to cover the whole area within the confinement.

Preferably a fixing period of time comprised between 30 seconds and 20 minutes, depending upon the type of used fixative, follows the dispensing of the fixer solution. In a preferred embodiment of the invention, the fixing time is equal approximately to twenty minutes with fixative containing 4% formaldehyde. In an alternative embodiment of the invention, the fixing time is equal to approximately 30 seconds, with fixative containing alcoholic solution.

It will be appreciated that, advantageously, the collecting and dispensing means of the apparatus then is further configured to allow a "temporal" stabilization of the components of the blood sample by collecting and dispensing a fixer solution.

In particular, for the immobilized cellular component (first informative component) the stabilization step implements by administering the fixer solution.

Advantageously, the suspension cellular component (second informative component) does not require a stabilization step through fixing solutions and can be used for subsequent analyses. In an alternative embodiment of the invention, in the test tube collecting such component a reagent for the preparation of the same to subsequent analyses is placed.

For the liquid component (third informative component) the stabilization step can implement through the administration of the fixer solution and/or through freezing. Advantageously, in case such liquid component had been subjected to a second centrifugation, there is no need for a stabilization step.

Such preferred configuration allows to have available a single automated apparatus which is capable of further improving the quality of the informative content of the components of the blood sample and of separating in an optimum way the pre-analytical step for preparing the blood sample entering from the subsequent analytical step of its components obtained as output, both in terms of time (stabilization) and space (immobilization).

For example, a fixer solution containing formaldehyde in concentration not higher than 4% could be used for the stabilization of the blood component including cells adherent to the support that is an alcohol-based solution and a fixer solution containing compounds inhibiting the apoptosis of cells for stabilizing the blood component including plasma, in case a stabilization step is required.

It is convenient to explain in which way the automated protocol described in the example and implemented by the apparatus of the invention distinguishes in using the fixer solution on the components of the blood sample with respect to what the known solutions provide and then what the associated advantages which the apparatus itself guarantees are.

As previously mentioned, nowadays typically preservatives on samples of whole blood are used which, in case of CTC analyses, are useful to avoid that the cells deteriorate and die. However, due to the presence of the liquid fraction of blood sample, such preservation mode actually succeeds only in limiting this process. In case of the plasma analysis, said preservatives instead are useful to avoid that the existing cells die and release healthy DNA, which would contaminate the sample. Actually, then, two complementary needs are treated that is on one side to preserve the cellular component of the sample to be analysed and on the other side to prevent from contaminating the plasma to be analysed.

In a preferred embodiment of the invention, the apparatus and the protocol it implements allow - differently from the known solutions - not to use any preservative during the step of collecting the blood sample but only EDTA which guarantees as little impact as possible on the sample, since the sample can be immediately processed through an insertion thereof in the apparatus 1.

In fact, advantageously it is possible to fix the first component, obtained as output and containing cells, subsequently to their immobilization on the support, in a definite way with the purpose of making it stable and analysable in their context already prepared for the analysis, exactly as it happens in case of fixing tissue sections on slide. In this case, the fixer freezes the state of the cells which can be analysed, if necessary, in a subsequent step.

In relation to the suspension cellular component, it is possible to have available a defined amount of cells not fixed in suspension which could be used, after adding specific reagents (such as lysis solutions by extraction of the various cellular components), in analytical tests both for identifying proteins, metabolites and for molecular analyses.

In relation to the informative component comprising plasma, since it is already separated from the cells, at the most it will have a minimum content of cells, involving a significantly reduced contamination risk. Advantageously, the fact of performing the second centrifugation passage further reduces this risk. Moreover, it will be appreciated that the plasma obtained with the apparatus, the invention relates to, for most applications does not require to be frozen or added with a preservation solution.

In substance, then, advantageously it is possible both to interrupt the cell degradation process since they advantageously can be fixed on their own support (condition otherwise not obtainable with the whole blood) and to reduce significantly (or even to remove completely) the use of preservatives as far as the plasma is concerned since it results to be immediately deprived of most part of the potentially contaminating cellular component.

An operator then can extract the housing means 31, 32 from the internal chamber 20 and recover the first and/or the second component and/or the third component in which the blood sample entering the apparatus 1 was prepared.

The present invention has been sofar described with reference to preferred embodiments thereof. It is to be meant that each one of the technical solutions implemented in the preferred embodiments, herein described by way of example, could advantageously be combined differently therebetween, to create other embodiments, belonging to the same inventive core and however all within the protective scope of the herebelow reported claims.

## Claims

1. An apparatus (1) for the automated processing of a sample of body fluid, preferably of whole blood, for clinical analysis, in particular of liquid biopsy, which apparatus (1) comprises:
▪ a box-like body (10) comprising an internal chamber (20) and an opening (12) for accessing said internal chamber (20),
▪ first housing means (31) configured to house said sample in said internal chamber (20),
▪ second housing means (33) configured to house reagents in said internal chamber (20),
▪ third housing means (32) configured to house a planar support suitable for receiving cells of said sample,
▪ fourth housing means (31p) configured to house a container apt to contain the liquid fraction of said sample,
▪ means for collecting and dispensing the sample and/or the reagents and/or intermediate preparations of the sample into said internal chamber (20),
▪ centrifugation means (40) operatively associated to said collecting and dispensing means,
▪ a control unit configured to control said collecting and dispensing means and said centrifugation means (40) according to an automated protocol,
**characterized in that**
the overall configuration of the apparatus being such that said automated protocol allows to obtain from the fluid sample entering said internal chamber (20) two or more informative components of the fluid sample and a waste component, said two or more informative components comprising a first component, a second component and/or a third component of the fluid sample separate and distinct from each other, wherein said first component includes cells of the sample immobilized on said planar support, wherein said second component includes suspension sample cells and wherein said third component includes the sample liquid fraction contained in said container, in particular a test tube.

2. The apparatus (1) according to claim 1, wherein said collecting and dispensing means is further configured to stabilize said first component by collecting and dispensing a fixing solution.

3. The apparatus (1) according to claim 1 or 2, wherein said collecting and dispensing means is further configured to stabilize said third component by collecting and dispensing a fixing solution.

4. The apparatus (1) according to anyone of the preceding claims, operatively associated to a device configured to count the number of cells, in particular of white blood cells, present in the fluid sample.

5. The apparatus (1) according to anyone of the preceding claims, wherein said dispensing means is configured to dispense a single uniform layer of cells in a substantially not overlapped way on the planar support.

6. The apparatus (1) according to anyone of the preceding claims, wherein said collecting and dispensing means comprises reading means configured to identify the body fluid sample, the reagents, the first component, the second component and/or the third informative component.

7. The apparatus (1) according to anyone of the preceding claims, wherein said collecting and dispensing means is configured to work with replaceable tips, chargeable in fifth housing means (34).

8. The apparatus (1) according to anyone of the preceding claims and further comprising a filtering system (50) configured to confine and filter the vapours generated by the reagents in said internal chamber (20).

9. A system comprising an apparatus (1) for the automated processing of a sample of body fluid, preferably of whole blood, for clinical analysis, in particular of liquid biopsy, according to any one of claims 1 to 8, and at least a planar support intended to receive the first component and comprising a surface for immobilizing cellular elements, the surface being treated with nano-materials.

10. A method for the automated preparation of cells immobilized on a planar support, of suspension cells and of the liquid fraction starting from a body fluid sample, through an apparatus according to any one of claims 1 to 8, which method comprises the steps of:
a) providing and introducing the fluid sample in first housing means present in the internal chamber (20) of said apparatus (1),
b) collecting the sample from said first housing means (31) and dispensing it in centrifugation means (40),
c) centrifuging the sample to obtain a component comprising cells and a component comprising the liquid fraction,
d) collecting the component comprising the liquid fraction from the centrifugation means (40) and dispensing it in a container, in particular a test tube, housed by additional housing means (31p) present in the internal chamber (20),
e) collecting the component comprising cells from the centrifugation means (40) and, alternatively or in combination, dispensing it
- on a planar support housed by additional housing means (32) present in the internal chamber (20),
- in an additional container, in particular a test tube, housed by said additional housing means (31p)
f) immobilizing said cells on said planar support.

11. The method according to the preceding claim, further comprising a step of providing reagent elements, in particular a fixer solution, in third housing means (33) of said internal chamber (20) and a step g) of administering the fixing solution to said first component and/or to said third component to obtain a stabilization thereof.

12. The method according to claim 10 or 11, further comprising a step of counting the cells present in the fluid sample to obtain a reference value and of dispensing a number of cells on said planar support depending upon said reference value.

13. The method according to any one of claims 10 to 12 wherein the body fluid sample is a sample of whole blood and said third component comprises plasma.

14. The method according to the preceding claim wherein the centrifugation step c) allows to obtain two initial components, in the form of an intermediate preparation comprising cells and a component comprising plasma, wherein downstream of said step d) il method further provides of
d') collecting reagent elements and dispensing it in said intermediate preparation,
d") centrifuging the intermediate preparation to obtain an intermediate component substantially comprising white blood cells,
and wherein the step e) comprises the fact of collecting the white blood cells from the centrifugation means (40) and dispensing on said planar support one single uniform layer of substantially not overlapped white blood cells.

15. The method according to any one of claims 11 to 14, wherein the reagent elements comprise Phosphate Buffer Saline, Red Blood Lysis Buffer, solution containing formaldehyde.

## Patentansprüche

1. Einrichtung (1) für das automatisierte Verarbeiten einer Körperflüssigkeitsprobe, vorzugsweise von Vollblut, für eine klinische Analyse, insbesondere einer Flüssigbiopsie, wobei die Einrichtung (1) umfasst:
▪ einen kastenartigen Körper (10), umfassend eine Innenkammer (20) und eine Öffnung (12) zum Zugreifen auf die Innenkammer (20),
▪ erste Gehäusemittel (31), die konfiguriert sind, um die Probe in der Innenkammer (20) unterzubringen,
▪ zweite Gehäusemittel (33), die konfiguriert sind, um Reagenzien in der Innenkammer (20) unterzubringen,
▪ dritte Gehäusemittel (32), die konfiguriert sind, um eine planare Stütze unterzubringen, die zum Aufnehmen von Zellen der Probe geeignet ist,
▪ vierte Gehäusemittel (31p), die konfiguriert sind, um einen Behälter unterzubringen, der passend ist, um die Flüssigfraktion der Probe zu enthalten,
▪ Mittel zum Sammeln und Abgeben der Probe und/oder der Reagenzien und/oder von Zwischenpräparaten der Probe in die Innenkammer (20),
▪ Zentrifugationsmittel (40), die mit den Sammel- und Abgabemitteln wirkverbunden sind,
▪ eine Steuereinheit, die konfiguriert ist, um die Sammel- und Abgabemittel und die Zentrifugationsmittel (40) gemäß einem automatisierten Protokoll zu steuern,
**dadurch gekennzeichnet, dass**
die Gesamtkonfiguration der Einrichtung derart ist, dass das automatisierte Protokoll es ermöglicht, aus der Flüssigkeitsprobe, die in die Innenkammer (20) eintritt, zwei oder mehrere informative Komponenten der Flüssigkeitsprobe und eine Abfallkomponente zu erhalten, die zwei oder mehreren informativen Komponenten umfassend eine erste Komponente, eine zweite Komponente und/oder eine dritte Komponente der Flüssigkeitsprobe, die voneinander getrennt und verschieden sind, wobei die erste Komponente die Zellen der Probe einschließt, die auf der planaren Stütze immobilisiert sind, wobei die zweite Komponente Suspensionsprobezellen einschließt und wobei die dritte Komponente die Probeflüssigfraktion einschließt, die in dem Behälter enthalten ist, insbesondere ein Reagenzglas.

2. Einrichtung (1) nach Anspruch 1, wobei die Sammel- und Abgabemittel ferner konfiguriert sind, um die erste Komponente durch das Sammeln und Abgeben einer Fixierlösung zu stabilisieren.

3. Einrichtung (1) nach Anspruch 1 oder 2, wobei die Sammel- und Abgabemittel ferner konfiguriert sind, um die dritte Komponente durch das Sammeln und Abgeben einer Fixierlösung zu stabilisieren.

4. Einrichtung (1) nach einem der vorstehenden Ansprüche, die mit einer Vorrichtung wirkverbunden ist, die konfiguriert ist, um die Anzahl von Zellen, insbesondere von weißen Blutkörperchen zu zählen, die in der Flüssigkeitsprobe vorhanden sind.

5. Einrichtung (1) nach einem der vorstehenden Ansprüche, wobei die Abgabemittel konfiguriert sind, um eine einzige gleichmäßige Schicht von Zellen in einer im Wesentlichen nicht überlappenden Weise auf die planare Stütze abzugeben.

6. Einrichtung (1) nach einem der vorstehenden Ansprüche, wobei die Sammel- und Abgabemittel Lesemittel umfassen, die konfiguriert sind, um die Körperflüssigkeitsprobe, die Reagenzien, die erste Komponente, die zweite Komponente und/oder die dritte informative Komponente zu identifizieren.

7. Einrichtung (1) nach einem der vorstehenden Ansprüche, wobei die Sammel- und Abgabemittel konfiguriert sind, um mit austauschbaren Spitzen zu funktionieren, die in fünften Gehäusemitteln (34) aufladbar sind.

8. Einrichtung (1) nach einem der vorstehenden Ansprüche und ferner umfassend ein Filtersystem (50), das konfiguriert ist, um die Dämpfe einzugrenzen und zu filtern, die durch die Reagenzien in der Innenkammer (20) erzeugt werden.

9. System, umfassend eine Einrichtung (1) für das automatisierte Verarbeiten einer Körperflüssigkeitsprobe, vorzugsweise von Vollblut, für die klinische Analyse, insbesondere der Flüssigbiopsie, nach einem der Ansprüche 1 bis 8, und mindestens eine planare Stütze, die vorgesehen ist, um die erste Komponente aufzunehmen und umfassend eine Oberfläche zum Immobilisieren zellulärer Elemente, wobei die Oberfläche mit Nanomaterialien behandelt ist.

10. Verfahren für die automatisierte Präparation von Zellen, die auf einer planaren Stütze immobilisiert sind, von Suspensionszellen und von der Flüssigfraktion, ausgehend von einer Körperflüssigkeitsprobe, durch eine Einrichtung nach einem der Ansprüche 1 bis 8, wobei das Verfahren die Schritte umfasst:
a) Bereitstellen und Einführen der Flüssigkeitsprobe in den ersten Gehäusemitteln, die in der Innenkammer (20) der Einrichtung (1) vorhanden sind,
b) Sammeln der Probe von den ersten Gehäusemitteln (31) und Abgeben dieser in die Zentrifugationsmittel (40),
c) Zentrifugieren der Probe, um eine Komponente, umfassend die Zellen, und eine Komponente, umfassend die Flüssigfraktion, zu erhalten,
d) Sammeln der Komponente, umfassend die Flüssigfraktion, von den Zentrifugationsmitteln (40) und Abgeben dieser in einen Behälter, insbesondere ein Reagenzglas, der/das durch zusätzliche Gehäusemittel (31p) untergebracht wird, die in der Innenkammer (20) vorhanden sind,
e) Sammeln der Komponente, umfassend die Zellen, von den Zentrifugationsmitteln (40) und, alternativ oder in Kombination, Abgeben dieser
- auf eine planare Stütze, die durch die zusätzlichen Gehäusemittel (32) untergebracht wird, die in der Innenkammer (20) vorhanden sind,
- in einen zusätzlichen Behälter, insbesondere ein Reagenzglas, der/das durch die zusätzlichen Gehäusemittel (31p) untergebracht wird
f) Immobilisieren der Zellen auf der planaren Stütze.

11. Verfahren nach dem vorstehenden Anspruch, ferner umfassend einen Schritt des Bereitstellens von Reagenzelementen, insbesondere einer Fixierlösung, in den dritten Gehäusemitteln (33) der Innenkammer (20) und einen Schritt g) eines Verabreichens der Fixierlösung an die erste Komponente und/oder an die dritte Komponente, um eine Stabilisierung davon zu erhalten.

12. Verfahren nach Anspruch 10 oder 11, ferner umfassend einen Schritt des Zählens der Zellen, die in der Flüssigkeitsprobe vorhanden sind, um einen Referenzwert zu erhalten, und des Abgebens einer Anzahl von Zellen auf die planare Stütze in Abhängigkeit von dem Referenzwert.

13. Verfahren nach einem der Ansprüche 10 bis 12, wobei die Körperflüssigkeitsprobe eine Vollblutprobe ist und die dritte Komponente Plasma umfasst.

14. Verfahren nach dem vorstehenden Anspruch, wobei der Zentrifugationsschritt c) es ermöglicht, zwei anfängliche Komponenten, in der Form eines Zwischenpräparats, umfassend die Zellen, und eine Komponente, umfassend das Plasma, zu erhalten, wobei ablaufseitig des Schritts d) das Verfahren ferner bereitstellt
d') Sammeln der Reagenzelemente und Abgeben dieser in das Zwischenpräparat,
d") Zentrifugieren des Zwischenpräparats, um eine Zwischenkomponente zu erhalten, im Wesentlichen umfassend die weißen Blutkörperchen,
und wobei der Schritt e) die Tatsache des Sammelns der weißen Blutkörperchen von den Zentrifugationsmitteln (40) und des Abgebens auf die planare Stütze einer einzigen gleichmäßigen Schicht von im Wesentlichen nicht überlappenden weißen Blutkörperchen umfasst.

15. Verfahren nach einem der Ansprüche 11 bis 14, wobei die Reagenzelemente eine Phosphatpufferkochsalzlösung, einen Rote-Blutzellen-Lysepuffer, eine Lösung, die Formaldehyd enthält, umfassen.

## Revendications

1. Appareil (1) pour le traitement automatisé d'un échantillon de fluide corporel, de préférence de sang total, pour une analyse clinique, en particulier d'une biopsie liquide, lequel appareil (1) comprend :
▪ un corps en forme de boîte (10) comprenant une chambre interne (20) et une ouverture (12) pour accéder à ladite chambre interne (20),
▪ des premiers moyens de logement (31) conçus pour loger ledit échantillon dans ladite chambre interne (20),
▪ des deuxièmes moyens de logement (33) conçus pour loger des réactifs dans ladite chambre interne (20),
▪ des troisièmes moyens de logement (32) conçus pour loger un support plan approprié pour recevoir des cellules dudit échantillon,
▪ des quatrièmes moyens de logement (31p) conçus pour loger un récipient apte à contenir la fraction liquide dudit échantillon,
▪ des moyens pour collecter et distribuer l'échantillon et/ou les réactifs et/ou des préparations intermédiaires de l'échantillon dans ladite chambre interne (20),
▪ des moyens de centrifugation (40) associés de manière opérationnelle auxdits moyens de collecte et de distribution,
▪ une unité de commande configurée pour commander lesdits moyens de collecte et de distribution et lesdits moyens de centrifugation (40) selon un protocole automatisé,
**caractérisé en ce que**
la configuration globale de l'appareil étant telle que ledit protocole automatisé permet d'obtenir, à partir de l'échantillon de fluide entrant dans ladite chambre interne (20), deux composants informatifs ou plus de l'échantillon de fluide et un composant de déchets, lesdits deux composants informatifs ou plus comprenant un premier composant, un deuxième composant et/ou un troisième composant de l'échantillon de fluide séparés et distincts les uns des autres, dans lequel ledit premier composant comporte des cellules de l'échantillon immobilisé sur ledit support plan, dans lequel ledit deuxième composant comporte des cellules d'échantillon de suspension et dans lequel ledit troisième composant comporte la fraction liquide d'échantillon contenue dans ledit récipient, en particulier un tube à essai.

2. Appareil (1) selon la revendication 1, dans lequel lesdits moyens de collecte et de distribution sont en outre conçus pour stabiliser ledit premier composant en collectant et en distribuant une solution de fixation.

3. Appareil (1) selon la revendication 1 ou 2, dans lequel lesdits moyens de collecte et de distribution sont en outre conçus pour stabiliser ledit troisième composant en collectant et en distribuant une solution de fixation.

4. Appareil (1) selon l'une quelconque des revendications précédentes, associé fonctionnellement à un dispositif configuré pour compter le nombre de cellules, en particulier de globules blancs, présentes dans l'échantillon de fluide.

5. Appareil (1) selon l'une quelconque des revendications précédentes, dans lequel lesdits moyens de distribution sont conçus pour distribuer une seule couche uniforme de cellules d'une manière sensiblement non superposée sur le support plan.

6. Appareil (1) selon l'une quelconque des revendications précédentes, dans lequel lesdits moyens de collecte et de distribution comprennent des moyens de lecture configurés pour identifier l'échantillon de fluide corporel, les réactifs, le premier composant, le deuxième composant et/ou le troisième composant informatif.

7. Appareil (1) selon l'une quelconque des revendications précédentes, dans lequel lesdits moyens de collecte et de distribution sont conçus pour travailler avec des embouts remplaçables, pouvant être chargés dans des cinquièmes moyens de logement (34).

8. Appareil (1) selon l'une quelconque des revendications précédentes et comprenant en outre un système de filtrage (50) conçu pour confiner et filtrer les vapeurs générées par les réactifs dans ladite chambre interne (20).

9. Système comprenant un appareil (1) pour le traitement automatisé d'un échantillon de fluide corporel, de préférence de sang total, pour analyse clinique, en particulier de biopsie liquide, selon l'une quelconque des revendications 1 à 8, et au moins un support plan destiné à recevoir le premier composant et comprenant une surface pour immobiliser des éléments cellulaires, la surface étant traitée avec des nanomatériaux.

10. Procédé de préparation automatisée de cellules immobilisées sur un support plan, de cellules de suspension et de la fraction liquide à partir d'un échantillon de fluide corporel, par le biais d'un appareil selon l'une quelconque des revendications 1 à 8, lequel procédé comprend les étapes consistant à :
a) fournir et introduire l'échantillon de fluide dans des premiers moyens de logement présents dans la chambre interne (20) dudit appareil (1),
b) collecter l'échantillon à partir desdits premiers moyens de logement (31) et le distribuer dans des moyens de centrifugation (40),
c) centrifuger l'échantillon pour obtenir un composant comprenant des cellules et un composant comprenant la fraction liquide,
d) collecter le composant comprenant la fraction liquide à partir des moyens de centrifugation (40) et le distribuer dans un récipient, en particulier un tube à essai, logé par des moyens de logement (31p) supplémentaires présents dans la chambre interne (20),
e) collecter le composant comprenant des cellules à partir des moyens de centrifugation (40) et, alternativement ou en combinaison, le distribuer
- sur un support plan logé par des moyens de logement (32) supplémentaires présents dans la chambre interne (20),
- dans un contenant supplémentaire, en particulier un tube à essai, logé par lesdits moyens de logement (31p) supplémentaires
f) immobiliser lesdites cellules sur ledit support plan.

11. Procédé selon la revendication précédente, comprenant en outre une étape consistant à fournir des éléments réactifs, en particulier une solution de fixateur, dans des troisièmes moyens de logement (33) de ladite chambre interne (20) et une étape g) consistant à administrer la solution de fixateur audit premier composant et/ou audit troisième composant pour obtenir une stabilisation de ceux-ci.

12. Procédé selon la revendication 10 ou 11, comprenant en outre une étape consistant à compter les cellules présentes dans l'échantillon de fluide pour obtenir une valeur de référence et à distribuer un certain nombre de cellules sur ledit support plan en fonction de ladite valeur de référence.

13. Procédé selon l'une quelconque des revendications 10 à 12, dans lequel l'échantillon de fluide corporel est un échantillon de sang total et ledit troisième composant comprend du plasma.

14. Procédé selon la revendication précédente dans lequel l'étape de centrifugation c) permet d'obtenir deux composants initiaux, sous la forme d'une préparation intermédiaire comprenant des cellules et d'un composant comprenant du plasma, dans lequel, en aval de ladite étape d) le procédé prévoit en outre de
d') collecter des éléments réactifs et les distribuer dans ladite préparation intermédiaire,
d") centrifuger la préparation intermédiaire pour obtenir un composant intermédiaire comprenant sensiblement des globules blancs,
et dans lequel l'étape e) comprend le fait de collecter les globules blancs à partir des moyens de centrifugation (40) et de distribuer sur ledit support plan une seule couche uniforme de globules blancs sensiblement non recouverts.

15. Procédé selon l'une quelconque des revendications 11 à 14, dans lequel les éléments réactifs comprennent une solution saline tamponnée au phosphate, un tampon de lyse des globules rouges et une solution contenant du formaldéhyde.
